# EUROPEAN PATENT SPECIFICATION

(11) **EP 1 507 229 B1**
(45) Date of publication and mention of the grant of the patent: **27.09.2006**
(21) Application number: 03026414.7
(22) Date of filing: 19.11.2003
(51) Int. Cl.: G06K 17/00, B42D 15/10

(54) **Process and machine for associating sensitive data and corresponding cards**
Verfahren und Vorrichtung zum Zusammenführen von vertraulichen Daten und entsprechenden Karten
Procédé et apparatus pour associer données confidentielles avec des cartes correspondantes

(30) Priority: 13.08.2003 IT ge20030063
(43) Date of publication of application: 16.02.2005
(73) Proprietor: MF Group S.p.A., 40040 Rioveggio BO (IT)
(72) Inventor: Mucelli, Sandro, San Donà di Piave (VE) (IT); Matalucci, Stefano, 20135 Milano (IT)
(74) Representative: Incollingo, Italo

(56) References cited:
- US-A- 5 494 544
- US-A- 5 880 453
- US-B1- 6 305 716
- US-B1- 6 386 591

## Description

The present invention concerns a process and apparatus for managing sensitive data of cards, sheets, tickets and the like, said data containing an identificative serial number on various supports such as chip cards, magnetic band cards, barcode 2D, 3D cards etc. etc..

The invention comprises also the relevant products.

### Prior Art

Up to now sensitive data were read and printed an a carrier or support generally in the form of a paper sheet (for instance in format A4) on which was thereafter adhered the card; the paper sheet was then folded and inserted in an envelope.

In general a telephone operator can be put in front of the problem of having hundreds thousands of said voluminous envelopes and must therefore have big spaces (store houses) at his disposal to offer hospitality to said envelope mass. Even worse, it was very difficult to be sure that said safety codes transfered on a paper sheet were exactly those destined to that card. Changes or corrections were not feasable.

US-A-6 386 591 discloses a transaction card with a removable label, whereby the serial number of the card is printed also on the label.

### Summary of the Invention

First object of the present invention is to provide a process and machine which allow the elimination of the Prior Art drawbacks, in particular of the above mentioned inconveniences.

An other object of the invention is to provide a process and machine which allow the substantial reduction of volume of the personificated (customerized) cards (and of the bodies possibly associated thereto) and to guarantee that the safety codes be effectively those destined to that card.

A further object is to provide cards in which the identification data and the variable codes are transferred, no more on a paper sheet, but on a label with removable adhesive.

The invention is set forth in independent claims 1, 7 and 11.

Characteristically the new system eliminates the folded paper card-carrying sheets, the big envelopes and the relevant containment spaces.

A further advantage of the method according to the invention is that it can be embodied with a highly efficient and precise apparatus. Said machine comprises substantially, besides loaders, file-holders and transporters, a serial data reader, a memory buffer and a data base and typically means to apply on the cards labels with removable adhesive which is preferably absent only on a label minor zone to facilitate its lifting and, above all, allow to the label to be adhesively bonded in places more adeguate to preserve the data thereupon, without encumbrance increase.

Characteristically said data are written and given to the user on a further card and/or carrier which, just because of their nature, are easely manageable and preserved, saving thus precious spaces. The label can be adhesively bonded f. i. to an agenda, desk-top or on an other usually utilized card, thus without involving further space.

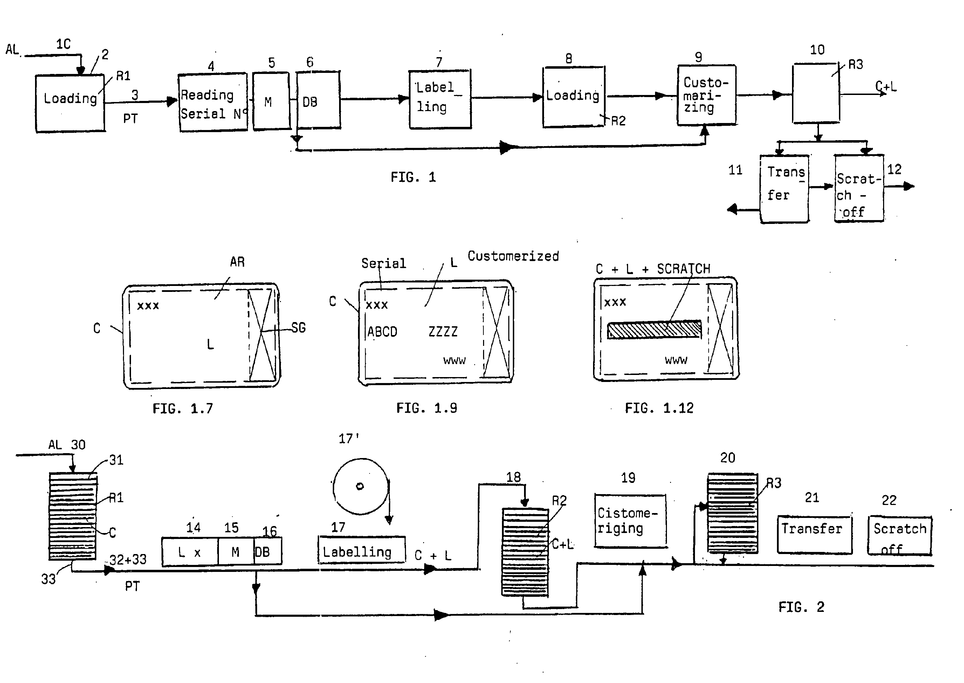

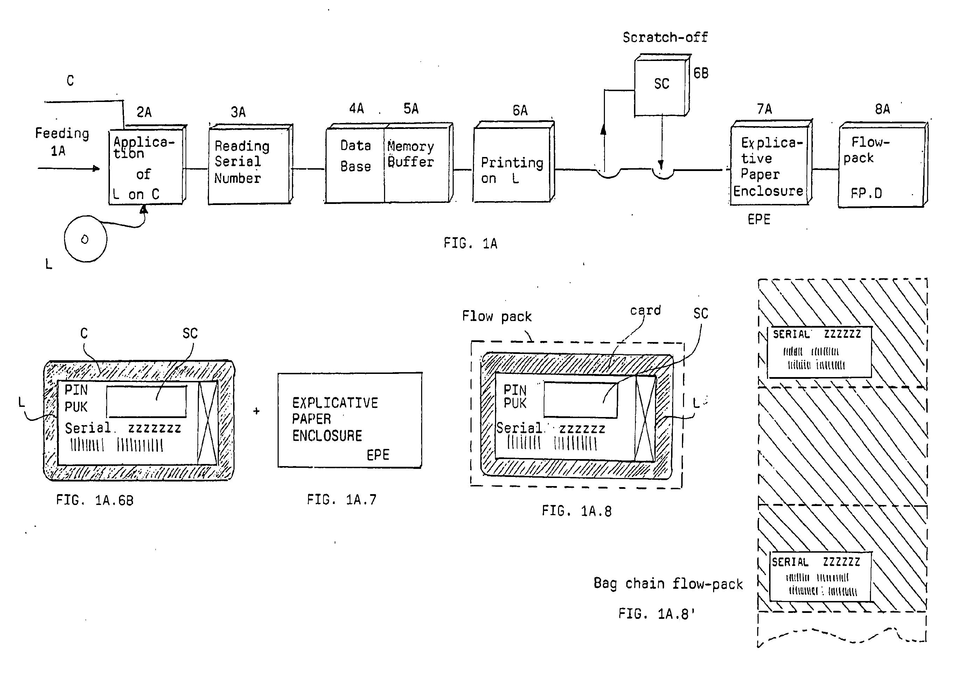

The various characteristics and advantages of the invention will better appear from the description of the embodiments represented in the accompanying drawings in which:
― Fig. 1 is a block scheme of the process steps;
― Fig. 1A is a variant of the process of fig. 1;
― Fig. 2 is a schematic representation of an apparatus to embody said process;
― Fig. 1.7, 1.9 and 1.12 show the card with the label after step 7, (in fig. 1) respectively same card with the label carrying the identification codes after step 9, and the card in question after application of scratch-off layer (after step 12); and
― Figures 1A.6B, 1A.7, 1A.8 and 1A.9 show the labelled card after the step 6B, 7A, 8A and 9 of figure 1A.
In fig. 1 is shown a first embodiment of the process according to the invention, which comprises following phases or steps (even not-necessarily in the hereunder sequence):
1. Feeding AL of the chip-cards with only the identification serial code (this card feeding may be contemporaneous to the label feeding in fig. 1A);
2. First loading in a conventional file-holder from the bottom of which are carried out;
3. The drawing and transport PT (preferably one by one) of the cards to the next step 4;
4. Reading said identification serial data, and
5. Memorizing (M) the relevant signal (5) and processing same
6. In the client data base (DB) which provides said memory (M) with the variable identification codes and serial code;
7. Application of a label L on said chip-card C, said label being provided with a removable adhesive (AR) which facilitates the grip of a portion of L (fig. 1.7) (it will later be shown that the label can be applied in step 2);
8. Second collection in file holder R2 of the sheets comprising the card C and the label L;
9. Personification of the label L with the identification serial data and with the variable codes assigned and coming (fig. 1.9) from the group memory-data-base;
10. Collection R3 of the chip-cards C with personificated labels;
11. Grip of the adhesive-free zone (SG) for the possible vision of the codes on the label, or for the transfer of the label, with the personificated data, on an other card or carrier;
12. On client request, at least a scratch-off layer (SC) is applied on at least a portion of the variable data which are covered till the scratching (f.i. with the aid of a coin) of said scratch-off layer, Fig.1.12 shows the card with label L personificated (customarized) with two visible codes (f.i. xxx and www, said xxx being referred f.i. on the serial data) and two variable codes (ABCD or zzzz) covered by one or more scratch-off layers.

As it can be seen, the code carrying paper sheets and the relevant envelopes and the preservation spaces are strongly reduced.

In a variant of fig. 1, the same process can be articulated as shown in the block scheme of fig. 1A and relevant top views of figures 1A.6, 1A.7, 1A.8, and 1A.9:
1A) - both cards C and label (L) are fed to the machine input;
2A) - the labels L are then applied on the central portion of the card back;
3A) - the so labelled cards (CL) are loaded in a reader, which reads the serial code from the chip (on the card) and controls the funcionality and sequentiality;
4A) - matching the serial code with variable data in a client data-base (DB);
5A) - loading in the memory buffer (MB) the variable data so associated to the card under processing;
6A) - printing said variable data from the Data-Base on the removable label which, after the activation of the card, can be removed and re-attached everywhere f.i. on a confortable place like an agenda or on the back of an other currently used card (not shown);
6B) - possibly a portion of the codes is covered by a scratch-off panel (fig. 1A.6B);
7A) - association of the cards with customarized labels (with or without the scratch-off panel) to an attached explicative paper sheet (EPE) (having f.i. a maximum of seven doors with a fenster to read the serial code) in a flow-packing device (FPD) with three weldings. Said explicative paper sheet can be applied either on the card front or on the card back; this means that the labelled cards (with or without explicative paper sheet) is inserted in small plastic envelopes;
8A) - the flow-pack envelope can be printed by simply opacizing the f.i. polypropilene film on the whole size of the small envelope with the exception of the zone carrying the serial code;
8B) - as a variant, the flow-pack can be embodied in the bag chain mode, with a cascade aperture of from 5 to 25 cards (fig. 1A.9);

In fig. 2 is schematically represented an embodiment of the apparatus to carry out the process, f.i. of fig. 1: it comprises, besides the feeder 11, a collector or fileholder 12 from which, with the aid of a device 13 of drawing or pick-up and transport, the cards C are taken to different types of readers 14 with relevant memory buffer (15, BM) and client data base (16, DB).

The cards CL read in the group reader buffer-data base are provided with the label in 17 by means of removable adhesive (AR) placed on the major portion of one face thereof, said labels being fed f.i. from a dispenser (17').

The cards so provided with labels L are collected in a second fileholder (18, R2) and from here are brought to the personification means (19) which is substantially a printer (f.i. thermographic, ink-jet, laser) which receives the data from the group memory-data base and applies same data typically on the label L which is now advantageously provided also with the serial data (xxx) originally present only on the card, as well as with the variable codes assigned by the data base and indicated f.i. with ABCD, zzzz, wwww.

The characteristics of the removable adhesive (AB) of label L make it possible to transfer and bond the card in places more adequate for the preservation of the data present on same card. Typically the data (serial and variable) are therefore written or transferred on an other support, f.i. an other card and/or carrier which for their nature can be easely handed and maintained, so saving much space.

The data carrying label can be glued on an agenda, disk top or on an already usually utilized card and be covered by at least one scratch-off layer SC which hides a code portion. After removing of SC with the aid f.i. of a coin or other means all data covered by said scratch-off layer SC will be visible.

The apparatus to embody the process variant of fig. 1A is substantially the same of fig. 2 only their space disposition is slightly different.

For the sake of illustrative clarity the invention has been described with particular reference to the embodiments shown in the drawings; obviously said embodiments are susceptible of those variantes, modifications, additions and the like which being at the reach of a mean technician of this field, can be considered as comprised or falling within the scope and spirit of the invention. For instance the card transportation can be stepswise or continuous, the number for the loaders and collectors R can be diferent from 3, the variable codes (ADCD, zzzz, wwww) obtained by processing and matching the reading of the serial code with the client data base can be diferent from those represented, both the cards and labels can be pre-personificated in modes and techniques different from those represented.

## Claims

1. Process for associating sensitive data to a substrate such as a card, sheet, ticket, pass and the like, said substrate containing identification serial data, in particular stored in a chip-card, magnetic band card, barcodes card, said substrate consisting of a multilayer body of paper, or of plastics material in particular of (co-)polymers of ethylene, propylene, vinylchloride, styrene, amides, acrylonitrile, wherein a removable label is applied on a surface of the substrate, and **characterized in that** the serial number as well as personalizing variable codes derived therefrom are printed on said label.

2. Process according to claim 1, in which:
- cards of different types are fed, one by one or in continuous, to a first fileholder or collector from which they are transported to a data reader where the serial number is the read;
- the read signals are matched with the signals of a client data-base and the so obtained variable codes data are the memorized;
- the so read cards are again collected in a fileholder and provided with a label spread with a removable adhesive on the major part of one of its faces;
- the so labelled cards are again loaded in a fileholder and then taken to a personalizing or customizing phase where both the memorized serial data and the variable codes are printed on the label;
- on request, the card with customized labels are again collected and taken to a phase of covering a portion of the codes with a scratch-off layer;
- and said labels, with or without the scratch-off layer, are transferred on a currently utilized carrier, in particular an agenda, desk-top.

3. Process according to claim 1, in which the label and the card are combined before the reading of the serial data and the relevant assignment of the variable codes.

4. Process according to claim 1, in which the card with labels customized with serial-, pin-, puk-data are submitted to at least one step selected from the group consisting of: association to an explicative paper enclosure, transfert of the label from the card to an other carrier, flow-package in a plastic small envelope.

5. Process according to claim 4, in which the envelopes are printed in particular by opacizing their whole front face with the exception of the transparent zone corresponding to the zone of the serial data.

6. Process according to claim 4, in which the flow-pack is realized in bag chain mode with cascade ouverture.

7. Apparatus to bring about the process according to the above claims, comprising:
- feeders comprising: of cards carrying a serial number and of labels with the major part of one of their faces being spread with a removable adhesive;
- means to apply the labels on the cards;
- a group consisting of a serial number reader, a client data-base and a memory buffer, which group associates variable personalizing codes to the serial number of a card and is placed upstream or downstream of said label application means;
- a printer arranged to print the serial number and the variable codes on the label;
- and means to apply, on the client's request, a scratch-off layer to cover at least a portion of the variable codes.

8. Apparatus according to claim 7, comprising means to remove the label from the card after the card activation and to adhere it to an other carrier.

9. Apparatus according to claim 7, further comprising means to associate to the card carrying the personalized label, an explicative paper enclosure.

10. Apparatus according to claim 7, further comprising means to flow-pack the card-label in small plastic envelopes which can be, on their turn, overall printed besides the zone corresponding to the serial code, said flow-pack means being realizable also in bag-chain mode, with cascade ouverture.

11. Card carrying a removable label printed with a serial number and personalizing variable codes derived from said serial number, said labelled card being associated with a paper explicative enclosure, and/or being flow-packed in plastic printable envelope.

## Patentansprüche

1. Verfahren zum Zusammenführen von vertraulichen Daten und einem Substrat, etwa einer Karte, einem Blatt, einem Fahrschein, einem Ausweis und dergleichen, wobei das Substrat Identifikations-Seriendaten enthält, insbesondere gespeichert in einer Chipkarte, einer Magnetstreifenkarte, einer Strichcodekarte, wobei das Substrat aus einem Mehrschichtträger aus Papier oder Kunststoff, insbesondere (Co-)Polymeren von Ethylen, Propylen, Vinylchlorid, Styrol, Amiden, Acrylnitril, besteht, und wobei an einer Fläche des Substrats ein ablösbares Etikett angebracht ist, **dadurch gekennzeichnet, daß** die Seriennummer und daraus abgeleitete variable Personalisierungscodes auf das Etikett gedruckt werden.

2. Verfahren nach Anspruch 1, wobei
Karten unterschiedlicher Typen einzeln oder fortlaufend einer ersten Ablage oder Sammelstelle zugeführt werden, von der sie zu einem Datenleser transportiert werden, wo die Seriennummer gelesen wird,
die gelesenen Signale mit den Signalen einer Kundendatei verglichen und die so erhaltenen variablen Codedaten gespeichert werden,
die so gelesenen Karten wieder in einer Ablage gesammelt und mit einem Etikett versehen werden, das auf dem Hauptteil einer seiner Flächen mit einem ablösbaren Kleber versehen ist,
die so etikettierten Karten wieder in eine Ablage gegeben und dann einer Personalisierungs- oder Kundenspezifizierungs-Phase zugeführt werden, wo sowohl die gespeicherten Seriendaten als auch die variablen Codes auf das Etikett gedruckt werden,
die Karten mit den kundenspezifizierten Etiketten nach Aufforderung wieder gesammelt und einer Phase zugeführt werden, in der ein Teil der Codes mit einer kratzfesten Schicht überzogen wird, und
die Etiketten mit oder ohne die kratzfeste Schicht an einen gerade benutzten Träger, insbesondere ein Bearbeitungs-Desktop, überführt werden.

3. Verfahren nach Anspruch 1, wobei das Etikett und die Karte vor dem Lesen der Seriendaten und der relevanten Zuordnung der variablen Codes vereinigt werden.

4. Verfahren nach Anspruch 1, wobei die Karten mit den mit Serien-, Pin-, PUK-Daten kundenspezifizierten Etiketten mindestens einem der folgenden Vorgänge unterworfen werden: Zusammenführen mit einer erläuternden Papieranlage, Übertragen des Etiketts von der Karte auf einen anderen Träger, Fließbandverpacken in einem kleinen Plastikumschlag.

5. Verfahren nach Anspruch 4, wobei die Umschläge bedruckt werden, wobei insbesondere ihre gesamte Vorderfläche mit Ausnahme des dem Bereich der Seriendaten entsprechenden transparenten Bereichs opak gemacht wird.

6. Verfahren nach Anspruch 4, wobei die Fließbandverpackung in Beutelketten mit gestaffelten Öffnungen erfolgt.

7. Vorrichtung zur Durchführung des Verfahrens nach einem der vorhergehenden Ansprüche mit
einer Zuführeinrichtung für Seriennummern tragende Karten und Etiketten, die auf dem Hauptteil einer ihrer Flächen mit einem ablösbaren Klebstoff versehen sind,
einer Einrichtung zum Anbringen der Etiketten auf den Karten,
einer aus einem Seriennummernleser, einer Kundenkartei und einem Pufferspeicher bestehenden Baugruppe, die variable Personalisierungscodes mit der Seriennummer einer Karte zusammenführt und vor oder hinter der Einrichtung zum Anbringen der Etiketten angeordnet ist,
einem Drucker zum Aufdrucken der Seriennummer und der variablen Codes auf das Etikett, und
einer Einrichtung, die je nach Kundenauftrag eine kratzfeste Schicht aufbringt, um mindestens einen Teil der variablen Codes zu bedecken.

8. Vorrichtung nach Anspruch 7 mit einer Einrichtung zum Ablösen des Etiketts von der Karte nach Aktivierung der Karte sowie zum Aufkleben des Etiketts auf einen anderen Träger.

9. Vorrichtung nach Anspruch 7 mit einer Einrichtung zum Zusammenführen der das personalisierte Etikett tragenden Karte mit einer erläuternden Papieranlage.

10. Vorrichtung nach Anspruch 7 mit einer Einrichtung zur Fließbandverpackung der Etikettkarten in kleinen Plastikumschlägen, die ihrerseits insgesamt mit Ausnahme des dem Seriencode entsprechenden Bereichs bedruckt sind, wobei die Fließband-Verpackungseinrichtung auch durch Beutelketten mit gestaffelten Öffnungen realisierbar ist.

11. Karte mit einem abnehmbaren Etikett, das mit einer Seriennummer und von dieser abgeleiteten variablen personalisierten Codes gedruckt ist, wobei die etikettierte Karte mit einer erläuternden Papieranlage zusammengeführt und/oder in einem bedruckbaren Plastikumschlag fließbandverpackt ist.

## Revendications

1. Procédé pour associer des données sensibles à un support tel que une carte, feuille, ticket, passe et similaires, ledit support contenant des données sériales d'identification, en particulier accumulées dans une carte à puce, à bande magnetique, à code à barres, ledit support comprenant un corps multicouches de papier ou matériel plastique en particulier de (co)-polymères d'éthylene, propylene, chlorure de vynile, styrene, amides, acrylonitrile, characterisé par le fait que une étiquette détachable est appliquèe su une surface dudit support et le numéro de série ainsi que les codes variables d'identification derivés desdites codes sont imprimés sur une étiquette.

2. Procédé selon la revendications 1, dans lequel des cartes de différents types sont alimentées à un premier classeur ou collecteur à partir duquel elles sont transportées à un lecteur de données où est lu le numéro de série ; les signaux lus sont confrontés avec les signaux d'une base de données de client et les codes variables ainsi obtenus sont memorisés ; les cartes ainsi lues sont à nouveau recueilles dans un classeur et sont pourvues d'une étiquette avec un adhésif remouvable étendu sur la majeure partie d'une de ses faces ; les cartes ainsi étiquettées sont ancore chargées dans un classeur et portées ainsi à une phase de personalisation ou d'association au client où soit les données sériales memorisées soit les codes variables sont imprimés sur l'étiquette ; sur demande, les cartes avec les étiquettes associées aux clients est à nouveau collectée et portée à une phase pour couvrir une partie des codes avec une couche à racler; et ledites étiquettes, avec ou sans couche grattable, sont transferées sur un support courrament utilisé, en particulier une agenda, un bureau de table.

3. Procédé selon la revendication 1, dans lequel l'étiquette et la carte sont combinées avant la lecture des données de série et la relative assignation des codes variables.

4. Procédé selon la revendication 1, dans lequel les cartes avec étiquette identifiée avec des données de série, "pin, puk" sont soumises au moins à une phase choisie du groupe consistant de : association à un paquet de papier explicatif, trasfert de l'étiquette de la carte à un autre support, emballage dan une petite enveloppe plastique.

5. Procédé selon la revendication 4, dans lequel les enveloppes sont imprimées en particulier en opacifiant leur entière face frontale avec l'execption de la zone transparente correspondante à la zone des données de série.

6. Procédé selon la revendication 4, dans lequel l'emballage à forme de flux est mis en oeuvre en un mode à chain de sacs avec ouverture en cascade.

7. Appareillage pour la mise en ouvre du procédé selon les revendications précedentes, comprenant : des alimentateurs de cartes portantes un numéro de série et des étiquettes ayantes la majeure partie d'une de leur faces couverte avec un adhésif détachable; des moyens pour appliquer les étiquettes sur les cartes ; un groupe consistant en un lecteur de numéros de série, d'une base de données de cllients et une mémoire, lequel groupe associe des codes d'identification variables au numéro sérial d'une carte et est placée en amont or en aval dédits moyens d'application des étiquettes; un appareil pour imprimer le numéro de série et les codes variables sur l'étiquette et des moyens pour appliquer, sur requête du client, une couche grattable pour couvrir au moins une partie des codes variables.

8. Appareillage selon la revendication 7, comprenant des moyens pour détacher l'étiquette de la carte après l'activation de ladite carte et pour la coller à un autre support.

9. Appareil selon la revendication 7, comprenant ultérieurement des moyen pour associer un annex de papier explicatif à la carte après son activation.

10. Appareillage selon la revendication 7, comprenant des ulterieurs moyens pour emballer la carte-étiquette dans des petites enveloppes plastiques lesquelles peuvent, à leur tour . être sur-imprimées à l'exception de la zone correspondante au code sérial, ledits moyens d'emballage à flux pouvant être mis en oeuvre aussi dans le mode de chaine de sacs avec ouverture à cascade.

11. Carte portant une étiquette détachable imprimée avec un numéro de série et un code d'identification variable derivé dudit numéro de série, ladite étiquette etant emballée dans une enveloppòe plastique imprimable.
